# EUROPÄISCHE PATENTSCHRIFT

(11) **EP 0 575 783 B1**
(45) Veröffentlichungstag und Bekanntmachung des Hinweises auf die Patenterteilung: **19.03.1997**
(21) Anmeldenummer: 93108813.2
(22) Anmeldetag: 01.06.1993
(51) Int. Cl.: H01H 37/76, H02H 5/04, H05K 1/18

(54) **Elektrischer Baustein**
Electrical unit
Pièce électrique

(30) Priorität: 12.06.1992 DE 4219304
(43) Veröffentlichungstag der Anmeldung: 29.12.1993
(73) Patentinhaber: Vishay Electronic GmbH, 95100 Selb (DE)
(72) Erfinder: Fischer, Kurt, W-8300 Altdorf (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 352 771
- WO-A-87/02835
- DE-B- 2 342 015
- DE-C- 4 143 095
- US-A- 4 096 464

## Beschreibung

Die Erfindung betrifft einen elektrischen Baustein gemäß dem Oberbegriff des Patentanspruchs 1.

Aus der DE-B-2 342 015 ist ein elektrischer Schutzbaustein dieser Art bekannt, bei dem der PTC-Widerstand zwischen federnden Fingern zweier Metallkontakte festgeklemmt ist. Einer der Metallkontakte ist mit einem freien Ende einer seitlichen neben dem PTC-Widerstand angeordneten Blattfeder verlötet, deren anderes Ende an der Leiterplatte angeschlossen ist. Wird der PTC-Widerstand durch einen zu hohen Strom über eine bestimmte Temperatur erhitzt, so wird durch die an die Lötstelle weitergeleitete Temperatur das zwischen dem Metallkontakt und der Blattfeder angeordnete Lot geschmolzen, so daß sich die Blattfeder aufgrund ihrer Vorspannung von dem Metallkontakt entfernt und somit der Stromfluß unterbrochen wird.

Bei einem weiteren elektrischen Schutzbaustein (GB 2 147 480 A) erfüllen die PTC-Widerstände eine reversible Schutzfunktion, indem der betreffende Stromkreis bei einer auftretenden Störung hochohmig und anschließend automatisch wieder niederohmig geschaltet wird. Ein solcher Schutz ist jedoch nur gegenüber solchen Störungen gegeben, die eine durch den PTC-Widerstand vorgegebene Belastungsgrenze nicht überschreiten. Bei Überschreiten dieser Belastungsgrenze muß nicht nur mit einer vollständigen Zerstörung des PTC-Widerstandes gerechnet werden, es besteht auch stets die Gefahr, daß infolge eines Abbrandes des PTC-Widerstandes auch andere Teile des Bausteins einschließlich der Leiterplatte, auf dem er montiert ist, beschädigt werden.

Aus der EP 0 352 771 A2 ist ein elektrischer Baustein bekannt, bei dem anstelle eines PTC-Widerstandes eine Wärme-überlastsicherung vorgesehen ist, die aus einem vorgespannten U- oder V-förmigen Bügel besteht, der über seinen Steg auf dem Substrat fixiert ist und dessen Schenkel am freien Ende jeweils mit einer Kontaktfläche des Substrats verlötet sind. Sobald das Lot infolge einer thermischen Überlastung erweicht, wird wenigstens einer der beiden Schenkel aufgrund der Vorspannung von der betreffenden Kontaktstelle wegbewegt, wodurch der betreffende Stromkreis unterbrochen wird. Nach einer jeweiligen Störung muß somit die Sicherung stets von neuem installiert werden.

Ziel der Erfindung ist es, einen weiteren elektrischen Schutzbaustein der eingangs genannten Art zu schaffen. Es soll insbesondere erreicht werden, daß bei einfachem Aufbau sowohl bei geringeren als auch bei größeren Störungen stets ein zuverlässiger Überspannungsschutz und ein zuverlässiger Schutz vor einer thermischen Überlastung gewährleistet ist, ohne daß hierzu die betreffende Sicherung in jedem Falls erneuert oder repariert werden muß. Weiterhin soll der elektrische Schutzbaustein kostengünstig herstellbar sein und eine kompakte Bauweise besitzen, wobei gleichzeitig die erforderliche Betriebs- und Funktionssicherheit in allen Fällen gewährleistet sein soll.

Die Aufgabe wird nach der Erfindung ausgehend von einem elektrischen Schutzbaustein der eingangs genannten Art durch die kennzeichnenden Merkmale des Anspruchs 1 gelöst.

Aufgrund des erfindungsgemäßen, eine integrierte Wärme-Überlast-Sicherung umfassenden Anschlußelements des PTC-Widerstands sind einerseits der PTC-Widerstand und andererseits aufgrund der Vermeidung einer Brandgefahr infolge einer Zerstörung des PTC-Widerstandes auch das Substrat sowie die auf diesem aufgebrachten Schaltungsteile selbst dann zuverlässig geschützt, wenn ausnahmsweise solch hohe Belastungen auftreten, die normalerweise zu einer völligen Zerstörung des PTC-Widerstands bzw. eines zugeordneten Dickfilmwiderstandes führen würden.

Die insbesondere auch dem Schutz des PTC-Widerstandes dienende Wärme-Überlast-Sicherung ist demnach so auszulegen, daß der PTC-Widerstand einerseits bei extremen Störfällen rechtzeitig, d.h. vor dessen völliger Zerstörung durch Abbrand, stromlos geschaltet wird und andererseits bei solchen Belastungen, die im Hinblick auf eine Zerstörung des Kaltleiters noch unkritisch sind, im normalen Schaltbetrieb arbeiten kann. Hierbei ist insbesondere auch von Vorteil, daß die Wärme-Überlast-Sicherung beispielsweise auf solche Spannungsspitzen, die für den PTC-Widerstand unschädlich sind, nicht anspricht.

In den Unteransprüchen sind vorteilhafte Ausführungsvarianten der Erfindung angegeben.

Die Erfindung wird im folgenden anhand eines Ausführungsbeispiels unter Bezugnahme auf die Zeichnung näher erläutert; in dieser zeigt:
- Fig. 1: eine schematische Draufsicht auf einen mit einem PTC-Widerstand versehenen Abschnitt eines schichtbausteins, wobei der PTC-Widerstand über das zugeordnete Anschlußelement bereits mit dem betreffenden Stromkreis verbunden ist,
- Fig. 2: einen Schnitt entlang der Linie I-I in Fig. 1,
- Fig. 3: eine Fig. 2 entsprechende Ansicht der Wärme-Überlast-Sicherung des Anschlußelements, deren kontaktgebender Federarm jedoch noch seine nichtgespannte Ausgangslage einnimmt, und
- Fig. 4 bis 6: die einzelnen Schritte zur Herstellung des erfindungsgemäßen Anschlußelements aus einem einheitlichen Stanzteil.

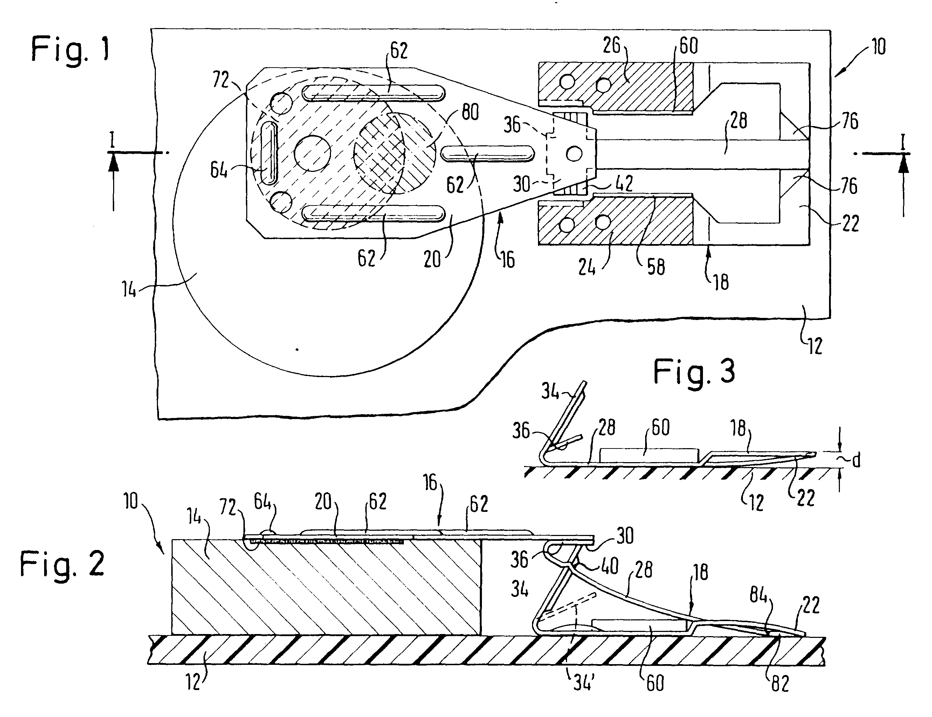

In den Fig. 1 und 2 ist ein Dickschichtbaustein 10 gezeigt, der mehrere auf einem Substrat 12 angeordnete Schaltungsteile umfaßt, zu denen ein PTC-Widerstand 14 zählt, der über ein Anschlußelement 16 mit einem zugeordneten Stromkreis verbunden ist, der über den PTC-Widerstand 14 in Abhängigkeit von der Temperatur hochohmig bzw. niederohmig schaltbar ist.

Der scheibenförmige PTC-Widerstand 14 ist durch einen elektrisch leitfähigen Silikon-Kleber auf dem Substrat 12 bzw. einer darauf angebrachten Leitfläche fixiert.

Die vom Substrat 12 abgewandte Stirnfläche des PTC-Widerstandes 14 ist über das Anschlußelement 16 mit dem betreffenden Stromkreis verbunden. Dieses Anschlußelement 16 umfaßt eine integrierte Wärme-Überlast-Sicherung 18 mit einem kontaktgebenden Federarm 28, der im montierten Zustand mit einer Kontaktstelle 30 an einer elektrisch und wärmeleitenden Platte 20 verlötet ist, die im Bereich 72 durch elektrisch leitende Klebung an der betreffenden Stirnfläche des PTC-Widerstandes 14 fixiert ist. Die Wärmeleitplatte 20 erstreckt sich über den seitlichen Rand des scheibenartigen PTC-Widerstandes 14 hinaus und weist am freien Ende dem Substrat 12 zugewandt die Kontaktstelle 30 auf, zwischen der und dem Substrat 12 die Wärme-Überlast-Sicherung 18 angeordnet ist.

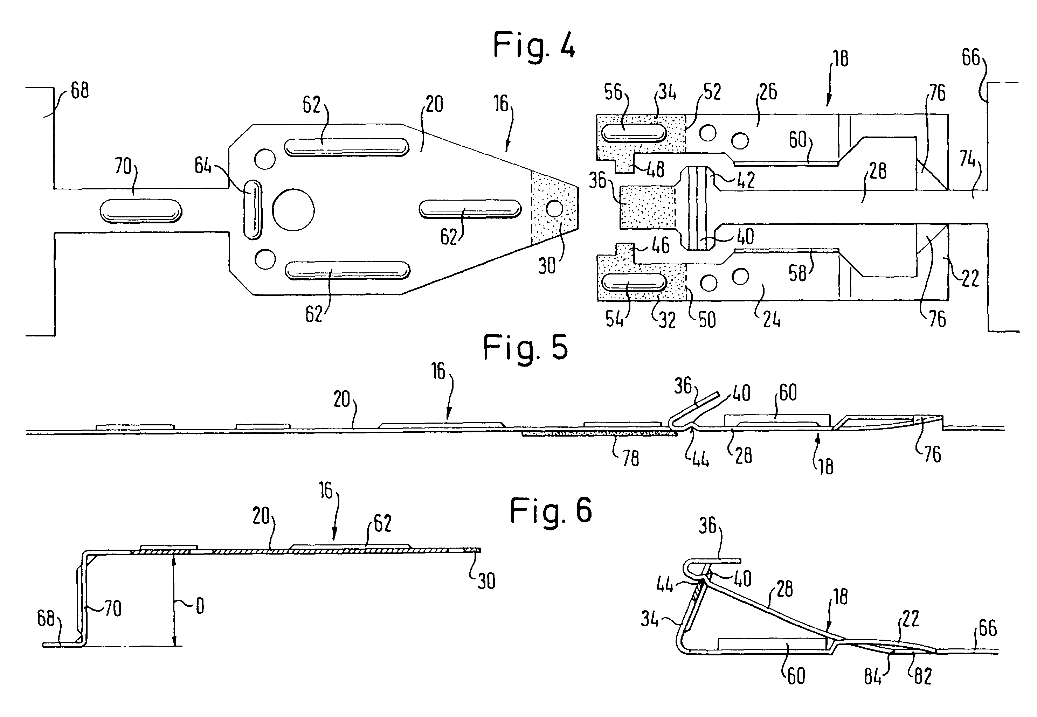

Wie insbesondere anhand der Fig. 4 bis 6 zu erkennen ist, besteht das die Wärme-Überlast-Sicherung 18 sowie die Wärmeleitplatte 20 umfassende Anschlußelement 16 zunächst aus einem einheitlichen Stanzteil mit zwei seitlichen Haltestreifen 66, 68, wobei die Wärme-Überlast-Sicherung 18 zunächst noch über einen Steg 74 mit dem Haltestreifen 66 und die Wärmeleitplatte 20 zunächst noch über einen Steg 70 mit dem Haltestreifen 68 verbunden ist.

Im Grundaufbau umfaßt die Wärme-Überlast-Sicherung 18 einen im wesentlichen ebenen, U-förmigen Rahmenteil 22, 24, 26 und eine mit dessen Mittelsteg 22 verbundene, den Federarm 28 bildende freiliegende Mittelzunge, die im entspannten Zustand zumindest im wesentlichen in der Rahmenebene liegt (vgl. Fig. 3 und 5).

Der Mittelsteg 22 des über seine beiden Schenkel 24, 26 auf dem Substrat 12 fixierten U-förmigen Rahmenteils 22, 24, 26 weist bei entspanntem Federarm 28 einen geringen Abstand d zum Substrat 12 auf und ist im Bereich 76 des mit ihm verbundenen Federarmes 28 so eingeknickt oder geprägt, daß der Federarm 28 zur Erzielung einer leichten Vorspannung mit seinem freien Ende 36 gegen das Substrat 12 gehalten ist (vgl. Fig.3 und 5). Im gespannten Zustand des Federarmes 28 wird der Mittelsteg 22 dagegen zum Substrat 12 hin gezogen, wie dies beispielsweise in den Figuren 2 und 6 gezeigt ist. In diesem Fall stützt sich der Federarm 28 mit seinem dem Mittelsteg 22 benachbarten Ende 82 flächig auf dem Substrat 12 ab, was durch eine besondere Knicklinie 84 in diesem Bereich des Federarmes erreicht wird (Fig. 2 und 6). Das U-förmige Rahmenteil 22, 24, 26 ist über die in Fig. 1 schraffiert dargestellten Abschnitte seiner beiden Schenkel 24, 26 beispielsweise wiederum mittels eines elektrisch leitenden Klebers auf dem Substrat 12 fixiert.

Der Federarm 28 wird dadurch gespannt, daß dessen freies Ende 36 aus der Rahmenebene heraus nach oben angehoben wird. In diesem gespannten Zustand wird der Federarm 28 zunächst durch zwei Stützarme 32, 34 gehalten, wobei diese Stützarme 32, 34 frühestens nach dem Verlöten des Federarmes 28 mit der Kontaktstelle 30 der Wärmeleitplatte 20 , vorzugsweise jedoch erst nach erfolgter Montage des Anschlußelements 16 auf dem Substrat 12 sowie am PTC-Widerstand 14, wieder von dem Federarm 28 entfernt werden, wie dies in Fig. 2 durch die gestrichelte Darstellung 34' des einen Stützarmes angedeutet ist.

Beim beschriebenen Ausführungsbeispiel sind die beiden Stützarme 32, 34 an den freien Enden der beiden Schenkel 24, 26 des U-förmigen Rahmenteils 22, 24, 26 vorgesehen und jeweils um eine querverlaufende Kerblinie 50 bzw. 52 zur Abstützung des Federarmes 28 in dessen gespannter Lage nach oben abbiegbar. Nach dem Verlöten des Federarmes 28 mit der Kontaktstelle 30 der Wärmeleitplatte 20 bzw. nach der endgültigen Montage des Anschlußelements 16 auf dem Substrat 12 und am PTC-Widerstand 14 sind die Stützarme 32, 34 vorzugsweise an diesen Kerblinien 50, 52 beispielsweise durch mehrmaliges Umbiegen von den Schenkeln 24, 26 des U-förmigen Rahmens 22, 24, 26 abtrennbar. Die Wärme-Überlast-Sicherung 18 ist jedoch bereits betriebsbereit, sobald das freie Ende 36 des Federarmes 28 von den Stützarmen 32, 34 freigegeben wird und der gespannte Federarm 28 lediglich noch über die betreffende Lötstelle an der Wärmeleitplatte 20 gehalten wird.

Um die Abstützung des Federarmes 28 durch die Stützarme 32, 34 zu ermöglichen, weist dieser zweckmäßigerweise einen seitlich verbreiterten, mit einer Sicke 40 oder dergl. versehenen Abschnitt 42 auf, in dessen Mulde 44 bei über die Stützarme 32, 34 gespanntem Federarm 28 seitlich an den Stützarmen 32, 34 vorspringende Stützlaschen 46, 48 eingreifen (vgl. insbesondere Fig. 2 und 4 bis 6).

Wie insbesondere anhand der Fig. 2, 5 und 6 zu erkennen ist, ist das freie Ende 36 des Federarmes 28 derart umgebogen, daß dieses bei gespanntem Federarm 28 flächig an der zugeordneten Kontaktstelle 30 der Wärmeleitplatte 20 anliegt.

Die nicht zu verbiegenden oder nicht zu knickenden Teile des die Wärme-Überlast-Sicherung 18 sowie die Wärmeleitplatte 20 umfassenden Anschlußelements 16 sind zumindest teilweise mit Versteifungselementen 54 - 64 in Form von Prägungen und/oder seitlich abgewinkelten Versteifungswänden versehen. So weisen beispielsweise die Schenkel 24, 26 des U-förmigen Rahmenteils 22, 24, 26 an den am Substrat 12 fixierten Abschnitten an den innenliegenden Längsseiten nach oben gebogene Versteifungswände 58, 60 auf. Demgegenüber sind die Stützarme 32,34 mit längsgerichteten Versteifungsnuten 54, 56 in Form von Prägungen versehen.

Die Wärmeleitplatte 20 weist gemäß den Fig. 1 und 4 drei längsgerichtete 62 sowie im Bereich des Stegs 70 ein querverlaufendes Versteifungselement 64 auf, die wiederum durch Versteifungsnuten in Form von Prägungen erhalten wurden.

Das U-förmige Rahmenteil 22, 24, 26, der Federarm 28, die Stützarme 32, 34 sowie die Wärmeleitplatte 20 sind zweckmäßigerweise aus gebürsteter Federbronze hergestellt und matt vernickelt sowie in den in Fig. 4 punktiert dargestellten Bereichen verzinnt.

Die einzelnen Schritte zur Herstellung des die Wärme-Überlast-Sicherung 18 sowie die Wärmeleitplatte 20 umfassenden Anschlußelements 16 aus einem einzigen Stanzteil ergeben sich aus den Fig. 4 bis 6, wobei nach dem Formstanzen und Prägen sowie dem Trennen der Wärme-Überlast-Sicherung von der Wärmeleitplatte (Fig. 4) der als Kontaktzunge dienende Federarm 28 geformt, die zu dessen Abstützung dienende Sicke 40 ausgebildet sowie die zur Erzeugung einer leichten Vorspannung dienende Prägung 76 vorgenommen werden (Fig. 5).

Ferner wird in einem Bereich 78 an der Unterseite des Stanzteils eine Lotschicht aufgebracht.

Gemäß Fig. 6 wird anschließend das die Wärmeleitplatte 20 aufweisende linke Stanzteil im Bereich der beiden Enden des Steges 70 so abgewinkelt, daß die Wärmeleitplatte 20 einen Abstand D zum zu dieser wiederum parallelen Haltestreifen 68 aufweist, der zumindest im wesentlichen gleich der Höhe des auf dem Substrat 12 aufzubringenden PTC-Widerstandes 14 ist. Ferner wird der Federarm 28 gespannt sowie durch die nach oben gebogenen Stützarme 32, 34 in der gespannten Lage gehalten. Danach werden die Wärmeleitplatte 20 sowie die Überlast-Sicherung 18 zusammengefügt und an der Kontaktstelle 30 miteinander verlötet. Die auf diese Weise erhaltenen Anschlußelemente bilden somit eine gegurtete Anordnung. Vor einer entsprechenden Bestückung des jeweiligen Substrats beispielsweise mittels eines Bestückungsautomaten werden schließlich die Haltestreifen 66, 68 abgetrennt. Während der Montage wird das Anschlußelement vorzugsweise in einem Bereich 80 der Wärmeleitplatte 20 (Fig. 1) vom Bestückungswerkzeug erfaßt und auf das Substrat 12 bzw. den PTC-Widerstand aufgesetzt. Schließlich werden die Stützarme 32, 34 von der Kontaktstelle 30 weg nach unten gebogen, wie dies in Fig. 2 beispielsweise anhand des strichliniert dargestellten Stützarmes 34' angedeutet ist, und vorzugsweise durch mehrmaliges Umbiegen an den Kerblinien 50, 52 von den Schenkeln 24, 26 abgetrennt (Fig. 4).

Im übrigen kann der Dickschichtbaustein 10 insbesondere so ausgelegt sein, wie dies in der DE 41 43 095 angegeben ist.

## Patentansprüche

1. Elektrischer Schutzbaustein, bei dem
a) ein PTC-Widerstand (14) mit einer Wärme-Überlast-Sicherung (18) in Reihe geschaltet ist,
b) der PTC-Widerstand (14) als Scheibe ausgebildet ist und
c) die Wärme-Überlast-Sicherung (18) als Anschlußelement des PTC-Widerstands (14) ausgebildet ist,
dadurch **gekennzeichnet,**
d) daß der PTC-Widerstand (14) mit einer seiner Seitenflächen leitend mit einem Substrat (12) bzw. einer darauf angebrachten Leitfläche verbunden ist,
e) daß auf der vom Substrat (12) abgewandten Seitenfläche des PTC-Widerstands (14) eine nach einer Seite überstehende Wärmeleitplatte (20) leitend befestigt ist,
f) an deren überstehendem Ende auf der dem Substrat (12) zugewandten Seite eine Kontaktstelle (30) ausgebildet ist,
g) und daß ein vorgespannter Federarm (28) mit der Kontaktstelle (30) verlötet sowie elektrisch leitend auf dem Substrat (30) fixiert ist.

2. Elektrischer Schutzbaustein nach Anspruch 1,
dadurch **gekennzeichnet,**
daß das Anschlußelement (16) einen zumindest im wesentlichen ebenene Rahmenteil (24, 26, 28) sowie wenigstens einen Stützarm (32, 34) umfaßt, daß der Federarm (28) an dem Rahmenteil (24, 25, 28) befestigt ist und im entspannten Zustand zumindest im wesentlichen in der Rahmenebene liegt, und daß der Federarm (28) durch den wenigstens einen Stützarm (32, 34) im gespannten Zustand gehalten ist, wobei der Stützarm (32, 34) frühestens nach dem Verlöten des Federarms (28) mit der Kontaktstelle (30) wieder vom Federarm (28) entfernbar ist.

3. elektrischer Schutzbaustein nach Anspruch 2, dadurch gekennzeichnet, daß das vorzugsweise am Substrat (12) fixierbare Rahmenteil (22, 24, 26) U-förmig ausgebildet ist und eine mit dessen Mittelsteg (22) verbundene, den Federarm (25) bildende freiliegende Mittelzunge umfaßt.

4. Elektrischer Schutzbaustein nach Anspruch 3, dadurch gekennzeichnet, daß der Mittelsteg (22) des über seine beiden Schenkel (24, 26) auf dem Substrat (12) fixierten U-förmigen Rahmenteils (22, 24, 25) bei entspanntem Federarm (28) einen geringen Abstand (d) zum Substrat (12) aufweist und im Bereich des mit ihm verbundenen Federarmes (28) so eingeknickt oder geprägt (76) ist, daß der Federarm (28) zur Erzielung einer leichten Vorspannung mit seinem freien Ende (36) gegen das Substrat (12) gehalten ist.

5. Elektrischer Schutzbaustein nach einem der vorhergehenden Ansprüche, dadurch gekennzeichnet, daß an den freien Enden der Schenkel (24, 26) des U-förmigen Rahmenteils (22, 24, 26) jeweils ein mit dem betreffenden Schenkel (24, 26) verbundener, in Richtung der Kontaktstelle (30) abbiegbarer Stützarm (32, 34) vorgesehen ist.

6. Elektrischer Schutzbaustein nach Anspruch 5, dadurch gekennzeichnet, daß der Federarm (28) einen seitlich verbreiterten, mit einer Sicke (40) oder dergl. versehenen Abschnitt (42) aufweist, in dessen Mulde (44) bei über die Stützarme (32, 34) gespanntem Federarm (28) seitlich an den Stützarmen (32, 34) vorspringende Stützlaschen (46, 48) eingreifen.

7. Elektrischer Schutzbaustein nach einem der vorhergehenden Ansprüche, dadurch gekennzeichnet, daß das freie Ende (36) des Federarmes (28) derart umgebogen ist, daß dieses bei gespanntem Federarm (28) flächig an der zugeordneten Kontaktstelle (30) anliegt.

8. Elektrischer Schutzbaustein nach einem der vorhergehenden Ansprüche, dadurch gekennzeichnet, daß die Stützarme (32, 34) jeweils über eine Kerblinie (50, 52) mit dem Rahmenteil (22, 24, 26) verbunden sind.

9. Elektrischer Schutzbaustein nach einem der vorhergehenden Ansprüche,
dadurch **gekennzeichnet,**
daß der PTC-Widerstand (14) und/oder der Federarm (28) mit dem Substrat (12) durch einen elektrisch leitenden Kleber verbunden sind und/oder daß die Wärmeleitplatte (20) mit einem elektrisch leitenden Kleber mit dem PTC-Widerstand (14) verbunden ist.

10. Elektrischer Schutzbaustein nach einem der vorhergehenden Ansprüche, dadurch gekennzeichnet, daß die nicht zu verbiegenden oder nicht zu knickenden Teile des Anschlußelements (16) zumindest teilweise mit Versteifungselementen (54 - 64), insbesondere mit Versteifungsnuten in Form von Prägungen und/oder seitlich abgewinkelten Versteifungswänden versehen sind.

11. Elektrischer Schutzbaustein nach einem der vorhergehenden Ansprüche, dadurch gekennzeichnet, daß des Rahmenteil (22, 24, 26), der Federarm (28), die Stützarme (32, 34) und/oder die Wäumeleitplatte (20) aus Federbronze hergestellt und zumindest abschnittsweise galvanisch vernickelt und verzinnt sind.

12. Elektrischer Schutzbaustein nach einem der vorhergehenden Ansprüche, dadurch gekennzeichnet, daß das Rahmenteil (22, 24, 26), der Federarm (28), die Stützarme (32, 34) und die Wärmeleitplatte (20) zunächst als einheitliches Stanzteil ausgebildet sind.

## Claims

1. Electrical protective module in which
a) a PTC resistor (14) is connected in series with a thermal overload fuse (18),
b) the PTC resistor (14) is formed as a disc, and
c) the thermal overload fuse (18) is formed as a terminal element of the PTC resistor (14),
characterised in that
d) the PTC resistor (14) is conductively connected by one of its side surfaces to a substrate (12) or to a conductive surface disposed thereon,
e) that a thermally conductive plate (23) projecting to one side is conductively attached to the side surface of the PTC resistor (14) facing away from the substrate (12),
f) a contact location (30) is formed at the protruding end of the thermally conductive plate at the side facing the substrate (12),
g) and a pre-tensioned spring arm (28) is soldered to the contact location (30) and also electrically conductively fixed to the substrate.

2. Electrical protective module in accordance with claim 1, characterised in that the terminal element (16) includes an at least substantially planar frame part (24, 26, 28) and also at least one support arm (32, 34); in that the spring arm (28) is secured to the frame part (24, 26, 28) and lies in the relaxed state at least substantially in the plane of the frame; and in that the spring arm (28) is held in the tensioned state by the at least one support arm (32, 34), with the support arm (32, 34) being removable from the spring arm (28) again at the earliest after the soldering of the spring arm (28) to the contact location (30).

3. Electrical protective module in accordance with claim 2, characterised in that the frame part (22, 24, 26) which is preferably fixable to the substrate (12) is of U-shape and includes a free-lying central tongue connected to its central web (22) and forming the spring arm (28).

4. Electrical protective module in accordance with claim 3, characterised in that the central web (22) of the U-shaped frame part (22, 24, 26) which is fixed via its two limbs (24, 26) to the substrate (12) has a small distance (d) from the substrate (12) when the spring arm (28) is relaxed, and is so inwardly kinked or embossed (76) in the region of the spring arm (28) which is connected to it that the spring arm (28) is held with its free end (36) against the substrate (12) in order to obtain a light pretension.

5. Electrical protective module in accordance with one of the preceding claims, characterised in that in each case a support arm (32, 34) which can be bent in the direction of the contact location (30) is provided at the free ends of the limbs (24, 26) of the U-shaped frame part (22, 24, 26) and is connected to the relevant limb (24, 26),

6. Electrical protective module in accordance with claim 5, characterised in that the spring arm (28) has a portion (42) which is laterally broadened and provided with a bead (40) or the like, with support lugs (46, 48) which project laterally at the support arms (32, 34) engaging in the trough (44) of the bead (40) when the spring arm is stressed or tensioned via the support arms (32, 34).

7. Electrical protective module in accordance with one of the preceding claims, characterised in that the free end (36) of the spring arm (28) is bent around in such a way that the latter lies in areal contact at the associated contact location (30) when the spring arm (28) is tensioned.

8. Electrical protective module in accordance with one of the preceding claims, characterised in that the support arms (32, 34) are each connected to the frame part (22, 24, 26) via a notch line (50, 52).

9. Electrical protective module in accordance with one of the preceding claims, characterised in that the PTC resistor (14) and/or the spring arm (28) are connected to the substrate (12) by an electrically conductive adhesive and/or in that the thermally conductive plate (20) is connected to the PTC resistor (14) with an electrically conductive adhesive.

10. Electrical protective module in accordance with one of the preceding claims, characterised in that the parts of the connecting element (16) which are not to be bent or not to be kinked are provided at least in part with stiffening elements (54 - 64), in particular with stiffening grooves in the form of embossed features and/ or laterally angled stiffening walls.

11. Electrical protective module in accordance with one of the preceding claims, characterised in that the frame part (22, 24, 26), the spring arm (28), the support arms (32, 34) and/or the thermally conductive plate (20) are manufactured of spring bronze and are galvanically nickel-plated and tinned at least sectionwise.

12. Electrical protective module in accordance with one of the preceding claims, characterised in that the frame part (22, 24, 26), the spring arm (28), the support arms (32, 34) and the heat conducting plate (20) are initially formed as a unitary stamped part.

## Revendications

1. Composant de protection électrique, dans lequel :
a) une résistance à coefficient de température positif (14) est raccordée en série à une sécurité de surcharge thermique (18) ;
b) la résistance (14) à coefficient de température positif est réalisée sous la forme d'une plaquette ; et
c) la sécurité de surcharge thermique (18) est réalisée sous forme d'un élément de raccordement de la résistance (14) à coefficient de température positif ;
caractérisé en ce que :
d) la résistance (14) à coefficient de température positif est raccordée de façon conductrice à un substrat (12), ou à une surface conductrice appliquée sur celui-ci, par l'une de ses surfaces latérales ;
e) une plaque (20) conductrice de la chaleur et dépassant sur un côté, est fixée de manière conductrice sur la face latérale, détournée du substrat (12), de la résistance (14) à coefficient de température positif ;
f) un emplacement de contact (30) est réalisé sur l'extrémité en dépassement de ladite plaque (20), sur le côté orienté vers le substrat (12) ; et
g) un bras élastique précontraint (28) est soudé sur l'emplacement de contact (30) et fixé de manière électriquement conductrice sur le substrat (12).

2. Composant de protection électrique selon la revendication 1,
caractérisé en ce que :
l'élément de raccordement (16) comprend une partie de cadre au moins sensiblement plane (24, 26, 28), ainsi qu'au moins un bras de soutien (32, 34), en ce que le bras élastique (28) est fixé sur la partie de cadre (24, 26, 28), et est situé dans l'état détendu au moins sensiblement dans le plan du cadre, et en ce que le bras élastique (28) est maintenu dans l'état précontraint par ledit au moins un bras de soutien (32, 34), et le bras de soutien (32, 34) est susceptible d'être à nouveau éloigné du bras élastique (28) au plus tôt après le soudage du bras élastique (28) sur l'emplacement de contact (30).

3. Composant de protection électrique selon la revendication 2, caractérisé en ce que la partie de cadre (22, 24, 26), de préférence capable d'être fixée sur le substrat (12), est réalisée sous forme de U et comporte une languette médiane libre, reliée à son âme médiane (22), qui forme le bras élastique (28).

4. Composant de protection électrique selon la revendication 3, caractérisé en ce que l'âme médiane (22) de la partie de cadre en forme de U (22, 24, 26), fixée sur le substrat (12) au moyen de ses deux bras (24, 26), présente, lorsque le bras élastique (28) est détendu, une faible distance (d) vis-à-vis du substrat (12), et en ce qu'elle est matricée ou repliée (76) dans la région des bras élastique (28) qui lui est reliée, de telle manière que le bras élastique (28) est maintenu contre le substrat (12) par son extrémité libre (36) pour atteindre une légère précontrainte.

5. Composant de protection électrique selon l'une quelconque des revendications précédentes, caractérisé en ce que, aux extrémités libres des bras (24, 26) de la partie de cadre en forme de U (22, 24, 26) il est prévu un bras de soutien respectif (32, 34) relié au bras concerné (24, 26) et susceptible d'être replié en direction de l'emplacement de contact (30).

6. Composant de protection électrique selon la revendication 5, caractérisé en ce que le bras élastique (28) présente un tronçon (42) élargi latéralement et pourvu d'une moulure (40) ou similaire, dans le creux (44) duquel s'engagent des pattes de soutien (46, 48) en saillie latéralement sur les bras de soutien (32, 34), lorsque le bras élastique (28) est précontraint par l'intermédiaire des bras de soutien (32, 34).

7. Composant de protection électrique selon l'une quelconque des revendications précédentes, caractérisé en ce que l'extrémité libre (36) du bras élastique (28) est recourbée de telle manière que, lorsque le bras élastique (28) est précontraint, celui-ci est appliqué à plat sur l'emplacement de contact associé (30).

8. Composant de protection électrique selon l'une quelconque des revendications précédentes, caractérisé en ce que les bras de soutien (32, 34) sont respectivement reliés par l'intermédiaire d'une ligne d'entaille (50, 52) à la partie de cadre (22, 24, 26).

9. Composant de protection électrique selon l'une quelconque des revendications précédentes, caractérisé en ce que la résistance (14) à coefficient de température positif et/ou le bras élastique (28) est relié au substrat (12) au moyen d'une colle conductrice de l'électricité, et/ou en ce que la plaque (20) conductrice de la chaleur est reliée à la résistance (14) à coefficient de température positif au moyen d'une colle conductrice de l'électricité.

10. Composant de protection électrique selon l'une quelconque des revendications précédentes, caractérisé en ce que les parties de l'élément de raccordement (16) qui ne sont pas à recourber ou à replier, sont pourvues au moins partiellement d'éléments de rigidification (54 - 64), en particulier de rainures de rigidification sous forme d'empreintes et/ou de parois de rigidification latérales repliées.

11. Composant de protection électrique selon l'une quelconque des revendications précédentes, caractérisé en ce que la partie de cadre (22, 24, 26) le bras élastique (28), les bras de soutien (32, 34) et/ou la plaque (20) conductrice de la chaleur sont réalisés en bronze élastique, et sont revêtus de nickel et de zinc par voie galvanique au moins par tronçons.

12. Composant de protection électrique selon l'une quelconque des revendications précédentes, caractérisé en ce que la partie de cadre (22, 24, 26), le bras élastique (28), les bras de soutien (32, 34) et la plaque (20) conductrice de la chaleur, sont réalisés tout d'abord sous forme d'une pièce matricée unitaire.
